# EUROPÄISCHE PATENTSCHRIFT

(11) **EP 3 712 117 B1**
(45) Veröffentlichungstag und Bekanntmachung des Hinweises auf die Patenterteilung: **28.07.2021**
(21) Anmeldenummer: 20161989.7
(22) Anmeldetag: 10.03.2020
(51) Int. Cl.: C03B 3/00, C03B 1/00, B01F 3/18, B01F 15/00, B01F 15/04

(54) **GEMENGEANLAGE ZUR HERSTELLUNG EINES GLASGEMENGES**
BATCH INSTALLATION FOR MAKING A GLASS BATCH
INSTALLATION DE MÉLANGE DESTINÉE À LA FABRICATION D'UN MÉLANGE VITRIFIABLE

(30) Priorität: 18.03.2019 DE 202019101523 U
(43) Veröffentlichungstag der Anmeldung: 23.09.2020
(73) Patentinhaber: Zippe GmbH u. Co. KG, 97877 Wertheim (DE)
(72) Erfinder: ROMSTÖCK, Manfred, 97896 Freudenberg (DE); MLYNAR, Günther, 97877 Wertheim-Bettingen (DE); ZIPPE, Dr. Philipp, 97877 Wertheim-Hofgarten (DE)
(74) Vertreter: advotec.

(56) Entgegenhaltungen:
- DE-A1- 3 036 968
- JP-A- 2006 231 712

## Beschreibung

Die Erfindung betrifft eine Gemengeanlage zur Herstellung eines aus mehreren Rohstoffen gemischten Glasgemenges nach dem Oberbegriff des Anspruchs 1.

Beim Herstellen von Glas müssen die dazu verwendeten Komponenten, insbesondere Sand und Soda, zuvor zu einem Glasgemenge gemischt werden. Das gemischte Glasgemenge kann dann anschließend einem Glasschmelzofen zugeführt und dort zu Glas geschmolzen werden. Das Glasgemenge kann dabei bspw. 60% Sand, 20% Soda und weitere 20% von verschiedenen Zuschlagsstoffen enthalten.

Die bekannten Gemengeanlagen zur Herstellung von Glasgemenge umfassen für die verschiedenen zu vermischenden Rohstoffe jeweils einen Vorratsbehälter, indem die verschiedenen Rohstoffe bevorratet werden können. Weiter umfassen die Gemengeanlagen eine Dosiereinrichtung, mit der die zu mischenden Mengen der Rohstoffe zur Herstellung des gewünschten Gemenges dosiert werden können. Weiter umfassen die Gemengeanlagen eine Mischeinrichtung, in der die zumischenden Mengen der Rohstoffe gemischt werden können. Die verschiedenen Funktionsbestandteile der Gemengeanlagen werden dabei durch geeignete Fördereinrichtungen miteinander verbunden, um die Rohstoffe bzw. das Gemenge jeweils weiter fördern zu können.

Bei den bekannten Gemengeanlagen handelt es sich um Großanlagen mit einer Herstellkapazität von mehreren 100 Tonen pro Tag. Diese Großanlagen werden als Einzelanlagen projektiert und dann beim jeweiligen Verwender unter Einsatz von Spezialisten und örtlicher Installationsfirmen aufgebaut. Diese Einzelprojektierung der zur Gemengeherstellung verwendeten Großanlagen hat vielerlei Nachteile. So müssen eine Vielzahl von fachfremden Installationsfirmen in die Projekte einbezogen werden, was aufgrund der Schnittstellen zu großen Problemen führen kann. Außerdem sind die bekannten Großanlagen zur Herstellung des Glasgemenges wenig flexibel, sodass Glas, bspw. Flaschen, nur in extrem hohen Stückzahlen hergestellt werden können. Auch können die bekannten Gemengeanlagen nicht vormontiert werden, sodass auf den Baustellen, die vielfach in abgelegenen Gegenden liegen, ein hoher Installationsaufwand anfällt. Ein späterer Rückbau der bekannten Gemengeanlagen, und die Gemengeanlage an einer anderen Stelle wieder aufzubauen, ist regelmäßig nicht möglich.

DE3036968 A1 lehrt eine Gemengeanlage einschließlich Vorratsbehältern, Dosiereinrichtungen und Mischeinrichtungen, wobei diese fest installiert sind. Die komplexe Anlage in DE3036968 A1 impliziert, dass bei Bedarf gewisse Vorratsbehälter ungenutzt bleiben können.

Ausgehend von diesem Stand der Technik ist es Aufgabe der vorliegenden Erfindung, eine neue Gemengeanlage zur Herstellung eines Glasgemenges vorzuschlagen, die die Nachteile des vorbekannten Stands der Technik vermeidet.

Vorteilhafte Ausführungsformen der Erfindung sind Gegenstand der Unteransprüche.

Das Konzept der erfindungsgemäßen Gemengeanlage beruht auf dem Grundgedanken, dass die Gemengeanlage zumindest ein transportables Gestell umfasst. In diesem transportablen Gestell wird dann zumindest ein Vorratsbehälter und/oder zumindest eine Dosiereinrichtung und/oder zumindest eine Mischeinrichtung aufgenommen. Die in dem Gestell aufgenommenen Funktionsteile der Gemengeanlage können auf diese Weise beim Hersteller vormontiert und zusammen mit dem Gestell auf die Baustelle zur Errichtung der Gemengeanlage geliefert werden. Durch die im Gestell vormontierten Funktionselemente werden die auf der Baustelle miteinander zu verbindenden Schnittstellen der Gemengeanlage drastisch reduziert. Durch das Konzept der Vormontage der einzelnen Funktionsbestandteile der Gemengeanlage in jeweils einem transportablen Gestell lassen sich außerdem Gemengeanlagen gemäß einem Baukasten zusammenstellen. Insbesondere können dadurch auch kleinere Gemengeanlagen realisiert werden. Soweit eine Gemengeanlage dann am entsprechenden Standort nicht mehr benötigt wird, kann die Gemengeanlage zu einem späteren Zeitpunkt auch wieder demontiert und durch Abtransport der transportablen Gestelle an einem anderen Standort gebraucht werden.

Welche Funktionsbestandteile in jeweils einem Gestell der Gemengeanlage eingebaut sind, ist grundsätzlich beliebig. Gemäß einer ersten Ausführungsform ist es vorgesehen, dass in dem Gestell mehrere Vorratsbehälter vorgesehen sind, in denen die Zuschlagsstoffe für die Glasherstellung bevorratet werden können. Da die notwendigen Mengen zur Bevorratung von Zuschlagsstoffen im Vergleich zu Sand und Soda relativ gering sind, können die für die Bevorratung der Zuschlagsstoffe notwendigen Vorratsbehälter problemlos in das transportable Gestell integriert werden.

Die Vorratsmengen zur Bevorratung von Sand und Soda sind sehr groß, da bspw. eine Gemengeanlage mit einer Kapazität von 100 Tonnen pro Tag circa 60 Tonnen Sand bzw. 20 Tonnen Soda verbraucht. Die Integration solch großer Vorratsbehälter zur Bevorratung von Sand und Soda in die Gestelle der erfindungsgemäßen Gemengeanlage ist deshalb regelmäßig nicht sinnvoll. Um dennoch die Anzahl der notwendigen Schnittstellen bei der Installation der Gemengeanlage möglichst gering zu halten, ist es besonders vorteilhaft, wenn in einem Gestell zumindest eine Zuführeinrichtung vorgesehen ist, an der Sand und/oder Soda zugeführt werden kann. Dies bedeutet mit anderen Worten, dass das Gestell selbst keine Bevorratungseinrichtung zur Bevorratung von Sand bzw. Soda enthält. Vielmehr wird durch die Zuführeinrichtung in dem Gestell eine definierte Schnittstelle geschaffen, an der der Betreiber der Gemengeanlage dann Sand bzw. Soda in den Herstellungsprozess einführen kann. Vorratsbehälter zur Bevorratung von Sand und Soda werden dann vom Betreiber der Gemengeanlage baustellenseitig errichtet und dem entsprechenden Gestell mit der Zufuhreinrichtung vorgeordnet.

In welcher Art die Zufuhreinrichtung zur Zufuhr von Sand und/oder Soda ausgebildet ist, ist grundsätzlich beliebig. Als besonders vorteilhaft hat es sich erwiesen, wenn die Zufuhreinrichtung in der Art eines Einfülltrichters ausgebildet ist. Solche Einfülltrichter können baulich leicht aus dem bekannten Vorratsbehältern zur Bevorratung von Sand und/Soda abgeleitet werden, da es sich um den unteren Teil des Vorratsbehälters handelt.

Die Zufuhreinrichtung selbst ist im Grundsatz nur zur Zuführung von Sand bzw. Soda in den Herstellungsprozess zur Herstellung des Gemenges vorgesehen. Um eine quasi kontinuierliche Zuführung von Sand bzw. Soda aus dem stationär errichteten Vorratsbehältern in die Zuführeinrichtung vermeiden zu können, ist es vorteilhaft, wenn in der Zuführeinrichtung, insbesondere in dem Einfülltrichter, eine geringe Menge von Sand bzw. Soda zwischengespeichert werden kann. Auf diese Weise kann dann die Zuführeinrichtung mit einer geeigneten Fördereinrichtung diskontinuierlich befüllt werden.

Um der Zuführeinrichtung Sand bzw. Soda aus einem vorgeordneten Vorratsbehälter zuführen zu können, kann zwischen dem Vorratsbehältern und der Zuführeinrichtung eine Fördereinrichtung vorgesehen werden. Eine solche Fördereinrichtung kann bspw. mittels eines Luftstroms Sand bzw. Soda aus dem jeweils vorgesehenen Vorratsbehälter entnehmen und in die Zuführeinrichtung einfördern. Durch Verwendung eines Luftstromsystems kann dabei auch eine Anhebung des Höhenniveaus vom Sand bzw. Soda realisiert werden, sodass Sand bzw. Soda anschließend während des eigentlichen Herstellprozesses unter ihrem Eigengewicht in der Anlage nach unten fließen.

Bei den Zuschlagsstoffen ist es vielfach erforderlich, dass auch vergleichsweise geringe Mengen gemischt werden müssen. Um diese geringen Mengen möglichst gleichmäßig in das Gemenge einmischen zu können, ist es deshalb besonders vorteilhaft, wenn in dem Gestell auch eine Vormischeinrichtung vorgesehen ist, in der die Zuschlagsstoffe für die Glasherstellung vorgemischt werden können.

Bei der Herstellung des Glasgemenges stellt die dabei auftretende Staubentwicklung ein zunehmendes Problem dar, da Staubemissionen vielfach nur in sehr geringen Mengen toleriert werden. Zur Lösung dieses Problems ist es deshalb besonders vorteilhaft, wenn das Gestell eine geschlossene Außenwandung aufweist, dass einen geschlossenen Innenraum im Gestell staubdicht umschließt. Auf diese Weise kann eine staubdichte Hülle um das Gestell realisiert werden. Soweit mehrere Gestelle zusammengestellt werden, um die Gemengeanlage zu bilden, weisen die Gestelle nur an den Außenwandungen eine staubdichte Wandung auf, die gemeinsam die Außenhaut der miteinander kombinierten Gestelle bilden.

Für die Anlagenkonfiguration der Gemengeanlage unter Verwendung der Gestelle gibt es verschiedenste Varianten. Besonders vorteilhaft ist es, wenn die Gemengeanlage mehrere transportable Gestelle umfasst, die dann jeweils eine oder mehrere Funktionseinheiten der Gemengeanlage umfassen. Durch Kombination der Gestelle können dann in einfacher Weise vormontierte Funktionselemente der Gemengeanlage auf die Baustelle angeliefert und gegebenenfalls auch wieder abtransportiert werden.

Im Hinblick auf den einfachen Stofffluss der zu mischenden Rohstoffe in der Gemengeanlage ist es besonders vorteilhaft, wenn die verschiedenen Gestelle der Gemengeanlage übereinander anordenbar sind, insbesondere übereinander gestapelt werden können. Auf diese Weise kann dann eine Zufuhr der Rohstoffe von oben erfolgen, wobei die Rohstoffe dann während des eigentlichen Herstellprozesses zur Herstellung des Gemenges von oben nach unten fließen.

Gemäß einer zweiten Alternativen Anlagenkonfiguration wird das Gestell mit dem Vorratsbehältern aufgeständert, sodass zwischen der Unterseite des Gestells und einer Fahrbahn ein Beladeraum gebildet wird. In diesem Beladeraum kann dann ein Förderfahrzeug unter dem Gestell aufgenommen werden, sodass die Rohstoffe aus dem Vorratsbehältern in dem aufgeständerten Gestell von oben in einen entsprechenden Förderraum des Förderfahrzeuges fließen.

Zur Dosierung der jeweils zu mischenden Mengen der Rohstoffe kann in dem Förderfahrzeug eine Waage vorgesehen werden. Beim Zufördern der Rohstoffe aus den Vorratsbehältern in dem aufgestapelten Gestell wird dann die jeweils zugeförderten Menge eines einzelnen Rohstoffes abgewogen und die Zufuhr bei Erreichen der vorgesehenen Dosiermenge beendet. Sobald dann alle Rohstoffe in der ausreichenden Menge in den Laderaum des Förderfahrzeuges zugefördert sind, kann das Förderfahrzeug zu einem weiteren Gestell mit einer Mischeinrichtung fahren, um dort die Rohstoffe miteinander zu mischen und anschließend dem Glasschmelzprozess in der Glasschmelzpfanne zu zufördern.

Die Abmessungen der Gestelle zur Aufnahme der verschiedenen Funktionsteile der Gemengeanlage sind grundsätzlich beliebig. Um einen einfachen Transport der Gestelle auch zu weiter entfernten Baustellen in einfacher Weise realisieren zu können, ist es vorteilhaft, wenn die Gestelle der Gemengeanlage in einem Frachtcontainer anordenbar sind. Auf diese Weise können alle Gestelle mittels Containertransport zu der Baustelle transportiert und gegebenenfalls auch von dort wieder abtransportiert werden. Zwei Ausführungsformen der Erfindung sind in den Zeichnungen schematisiert dargestellt und werden nachfolgend beispielhaft erläutert.

Es zeigen:
- **Fig. 1**: eine erste Anlagenkonfiguration mit mehreren Gestellen zur Bildung einer Gemengeanlage in seitlicher Ansicht;
- **Fig. 2**: das oberste Gestell der Gemengeanlage gemäß Fig. 1 in Ansicht von oben;
- **Fig. 3**: eine zweite Anlagenkonfiguration einer Gemengeanlage mit mehreren Gestellen in seitlicher Ansicht.

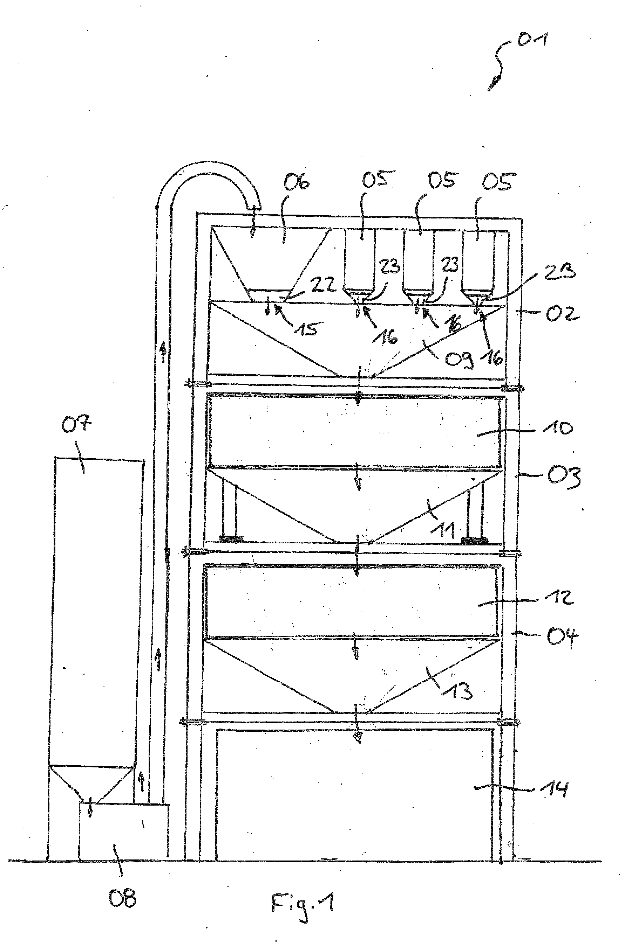

**Fig. 1** zeigt eine erste Gemengeanlage 01 zur Herstellung eines Glasgemenges in seitlicher Ansicht. Die Gemengeanlage 01 umfasst drei Gestelle 02, 03 und 04, die übereinander gestapelt sind. Die Abmessungen der Gestelle 02, 03 und 04 entsprechen dem Innenraum eines Transportcontainers, sodass die vormontierten Gestelle 02, 03 und 04 auf die Baustelle zur Herstellung der Gemengeanlage 01 in vormontierter Form transportiert werden können.

Das Gestell 02 ist zur Bevorratung eines Teils der verschiedener Rohstoffe, die Bestanteil des herzustellenden Gemenges sind, vorgesehen. Dazu sind im Gestell 02 sechs Vorratsbehälter 05 befestigt. Außerdem sind in dem Gestell 02 zwei in der Art von Einfülltrichter ausgebildete Zuführeinrichtung 06 vorgesehen, über die der Gemengeanlage 01 Sand bzw. Soda aus vorgeordneten Vorratsbehältern 07 zugefördert werden können. Dazu ist eine Zuführeinrichtung 08 vorgesehen, mit der Sand bzw. Soda aus dem entsprechenden Vorratsbehältern 07 entnommen und mittels eines Luftstroms in die Höhe gehoben und dann in die als Einfülltrichter ausgebildeten Zuführeinrichtungen 06 im Gestell 02 eingefördert werden. Die Zuschlagsstoffe aus den Vorratsbehältern 05 bzw. Sand und Soda, die über die Fördereinrichtung 08 in die Einfülltrichter 06 gefördert werden, können mit Austrageinrichtungen 22 und 23 dosiert ausgefördert werden. Die Einzelbestandteile fließen durch Öffnungen 15 und 16 nach unten ab und gelangen über einen Sammeltrichter 09 zum nächsten Gestell 03.

Im Gestell 03 ist eine Waage 10 befestigt, mit der die Dosierung der Zuschlagsstoffe bzw. von Sand und Soda für das jeweils herzustellende Gemenge abgemessen werden können. Sobald die jeweils richtigen Mengen an Sand, Soda und Zuschlagsstoffen in der Waage 10 dosiert sind, werden die Austrageinrichtungen 22 und 23 gestoppt, so dass kein zusätzliches Material nachgefördert wird. Das zunächst noch ungemischte Gemenge wird dann über einen Sammeltrichter 11 dem darunter liegenden Gestell 04 zugeführt.

Im Gestell 04 ist eine Mischeinrichtung 12 befestigt, mit der die Zuschlagsstoffe, Sand und Soda miteinander vermischt werden. Das so hergestellte Gemenge gelangt anschließend über einen Sammeltrichter 13 in einen Förderbunker 14, von wo es mit geeigneten Fördermitteln in die Schmelzwanne zum Erschmelzen der Glasmasse gefördert werden kann.

Durch das Stapeln der Gestelle 02, 03 und 04 über dem Förderbunker 14 kann eine Gemengeanlage 01 sehr leicht und sehr schnell hergestellt werden. Die in den Gestellen 02, 03 und 04 vorhandenen Funktionsmodulen, nämlich die Vorratsbehälter 05, die Zufuhreinrichtung 06, die Waage 10 und die Mischeinrichtung 12 können mit den jeweiligen Sammeltrichtern 09, 11 und 13 beim Hersteller vormontiert und in Containern auf die entsprechende Baustelle zur Herstellung der Gemengeanlage vormontiert angeliefert werden. So weit erforderlich kann die Gemengeanlage 01 auch sehr einfach wieder demontiert und die Gestelle 02 zu einer anderen Baustelle transportiert werden.

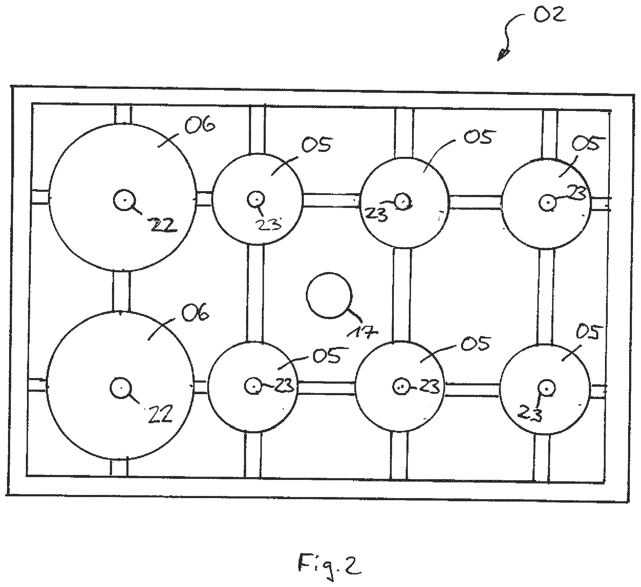

**Fig. 2** zeigt das Gestell 02 mit den darin vormontierten Vorratsbehältern 05 und den beiden Zuführeinrichtungen 06 für Sand und Soda in Ansicht von oben. Durch die Öffnungen 15 in den Vorratsbehältern 05 und die Öffnungen 16 in den Zuführeinrichtungen 06 können die Zuschlagsstoffe bzw. Sand und Soda in den darunterliegenden Sammeltrichter 09 fließen und gelangen von dort durch eine Öffnung 17 zu den darunterliegenden Gestell 03 mit der Waage 10. Abhängig vom jeweils herzustellenden Glasgemenge kann das Gestell 02 außerdem eine nichtdargestellte Vormischeinrichtung enthalten, in der die Zuschlagsstoffe aus den Vorratsbehältern 05 vorgemischt werden. Um die Vorratsbehälter 05 mit den entsprechenden Zuschlagsstoffen beschicken zu können, können weitere in Fig. 1 bzw. 2 nicht dargestellte Fördereinrichtungen vorgesehen werden.

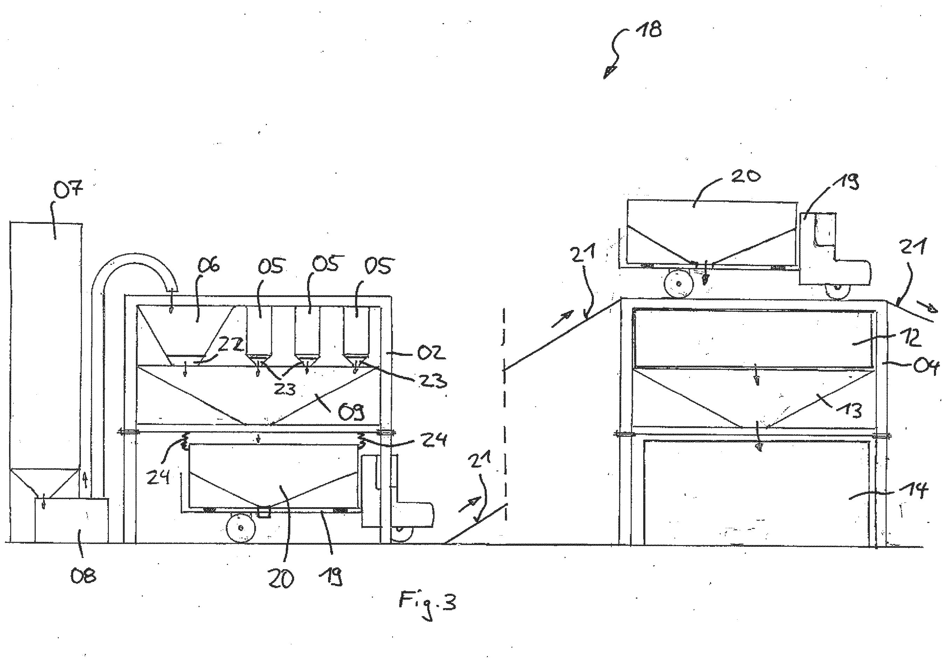

**Fig. 3** zeigt eine zweite Ausführungsform einer schematisiert dargestellten Gemengeanlage 18. Die Gemengeanlage 18 umfasst wiederum das Gestell 02 mit den Vorratsbehältern 05 und den Zufuhreinrichtungen 06 mit dem vorgeordneten Vorratsbehälter 07 und der Fördereinrichtung 08. Weiter umfasst die Gemengeanlage 18 das Gestell 04 mit der Mischeinrichtung 12, die wiederum über dem Förderbunker 14 angeordnet ist.

Zur Dosierung der zu mischenden Rohstoffe wird bei der Gemengeanlage 18 ein Förderfahrzeug 19 genutzt. Das Förderfahrzeug 19 umfasst eine Waage 20, mit der die durch den Sammeltrichter 09 nach unten fließenden Zuschlagsstoffe bzw. Sand und Soda abgemessen werden können. Um den unerwünschten Austritt von Staub zu vermindern, wird das Förderfahrzeug 19 mittels einer Staubfangmanschette 24 staubdicht an das Gestell 02 angekoppelt. Sobald alle für das zu herstellende Gemenge notwendigen Rohstoffe in die Waage 20 des Förderfahrzeuges 19 eingefördert sind, werden wiederum die Austrageinrichtungen 22 und 23 gestoppt, so dass kein zusätzliches Material nachgefördert wird.

Dann fährt das Förderfahrzeug 19 entlang einer schematisiert dargestellten Fahrbahn 21 zu einem Podest oberhalb des Gestells 04. Bei dem Förderfahrzeug 19 kann es sich um ein autonom fahrendes Fahrzeug handeln, dessen Fahrweg frei programmierbar ist, um unterschiedliche Anlageteile der Gemengeanlage miteinander zu verbinden.

Über dem Gestell 04 werden die Rohstoffe aus der Waage 20 des Förderfahrzeugs 19 in die Mischeinrichtung 12 des Gestells 04 abgelassen und dort miteinander gemischt. Anschließend gelangt das gemischte Gemenge dann in den Förderbunker 14, von wo es zur Schmelzwanne zum erschmelzen der Glasmasse gefördert wird.

## Patentansprüche

1. Gemengeanlage (01, 18) zur Herstellung eines aus mehreren Rohstoffen gemischten Glasgemenges, mit zumindest einem Vorratsbehälter (05), in dem ein Rohstoff bevorratet werden kann, und mit zumindest einer Dosiereinrichtung (10), mit der die zu mischenden Mengen der Rohstoffe dosiert werden können, und mit zumindest einer Mischeinrichtung (12), in der die zu mischenden Mengen der Rohstoffe gemischt werden können,
**dadurch gekennzeichnet,**
**dass** die Gemengeanlage (01, 18) zumindest ein transportables Gestell (02, 03, 04) umfasst, wobei in dem Gestell (02, 03, 04) zumindest ein Vorratsbehälter (05) und/oder zumindest eine Dosiereinrichtung (10) und/oder zumindest eine Mischeinrichtung (12) aufgenommen ist.

2. Gemengeanlage nach Anspruch 1,
**dadurch gekennzeichnet,**
**dass** in dem Gestell (01, 18) mehrere Vorratsbehälter (05) vorgesehen sind, in denen Zuschlagsstoffe für die Glasherstellung bevorratet werden können.

3. Gemengeanlage nach Anspruch 1 oder 2,
**dadurch gekennzeichnet,**
**dass** in dem Gestell (01, 18) zumindest eine Zuführeinrichtung (06) vorgesehen ist, an der Sand und/oder Soda zugeführt werden kann.

4. Gemengeanlage nach Anspruch 3,
**dadurch gekennzeichnet,**
**dass** die Zuführeinrichtung (06) zur Zufuhr von Sand und/oder Soda in der Art eines Einfülltrichters ausgebildet ist.

5. Gemengeanlage nach Anspruch 3 oder 4,
**dadurch gekennzeichnet,**
**dass** in der Zuführeinrichtung (06), insbesondere in dem Einfülltrichter, eine geringe Menge von Sand und/oder Soda zwischengespeichert werden kann.

6. Gemengeanlage nach einem der Ansprüche 3 bis 5,
**dadurch gekennzeichnet,**
**dass** der Zuführeinrichtung (06) eine Fördereinrichtung (08) vorgeordnet ist, wobei die Fördereinrichtung (08) Sand und/oder Soda aus jeweils einem zugeordneten Vorratsbehälter (07) in die Zuführeinrichtung (06) des Gestells (02) fördern kann.

7. Gemengeanlage nach einem der Ansprüche 1 bis 6,
**dadurch gekennzeichnet,**
**dass** in dem Gestell (02) mit den Vorratsbehältern (05) eine Vormischeinrichtung vorgesehen ist, in der die Zuschlagsstoffe für die Glasherstellung vorgemischt werden können.

8. Gemengeanlage nach einem der Ansprüche 1 bis 7,
**dadurch gekennzeichnet,**
**dass** das Gestell (02, 03, 04) eine geschlossene Außenwandung aufweist, dass einen geschlossenen Innenraum im Gestell (02, 03, 04) staubdicht umschließt.

9. Gemengeanlage nach einem der Ansprüche 1 bis 8,
**dadurch gekennzeichnet,**
**dass** die Gemengeanlage (01, 18) mehrere transportable Gestelle (02, 03, 04) umfasst, in denen jeweils zumindest ein Vorratsbehälter (05) und/oder zumindest eine Dosiereinrichtung (10) und/oder zumindest eine Mischeinrichtung (12) aufgenommen ist.

10. Gemengeanlage nach Anspruch 9,
**dadurch gekennzeichnet,**
**dass** die verschiedenen Gestelle (02, 03, 04) der Gemengeanlage (01) übereinander anordenbar sind.

11. Gemengeanlage nach Anspruch 10,
**dadurch gekennzeichnet,**
**dass** die verschiedenen Gestelle (02, 03, 04) der Gemengeanlage (01) übereinander stapelbar sind.

12. Gemengeanlage nach einem der Ansprüche 1 bis 11,
**dadurch gekennzeichnet,**
**dass** das Gestell (02) mit zumindest einem Vorratsbehälter (05) aufgeständert ist, so dass zwischen der Unterseite des Gestells (02) und einer Fahrbahn (21) ein Beladeraum gebildet wird, in dem ein zu beladenes Förderfahrzeug (19) unter dem Gestell (02) aufgenommen werden kann.

13. Gemengeanlage nach Anspruch 12,
**dadurch gekennzeichnet,**
**dass** das Förderfahrzeug (19) eine Waage (20) umfasst, in der die zu mischenden Mengen der Rohstoffe abgewogen werden können.

14. Gemengeanlage nach einem der Ansprüche 1 bis 13,
**dadurch gekennzeichnet,**
**dass** das Gestell (02, 03, 04) der Gemengeanlage (01, 18) in einem Frachtcontainer anordenbar ist.

## Claims

1. A batch plant (01, 18) for producing a glass batch mixed of several raw materials, said batch plant (01, 18) having at least one storage container (05) in which a raw material is stored, having at least one proportioning means (10) by means of which the quantities of the raw materials to be mixed are proportioned, and having at least one mixing means (12) in which the quantities of the raw materials to be mixed are mixed,
**characterised in that**
the batch plant (01, 18) comprises at least one transportable stand (02, 03, 04), at least one storage container (05) and/or at least one proportioning means (10) and/or at least one mixing means (12) being placed in the stand (02, 03, 04).

2. The batch plant according to claim 1,
**characterised in that**
several storage containers (05) are provided in the stand, additives for the glass production being stored in said storage containers (05).

3. The batch plant according to claim 1 or 2,
**characterised in that**
at least one feeding means (06) is provided in the stand, sand and/or soda being fed at said feeding means (06).

4. The batch plant according to claim 3,
**characterised in that**
the feeding means (06) for feeding sand and/or soda is realised in the manner of a feed hopper.

5. The batch plant according to claim 3 or 4,
**characterised in that**
a small quantity of sand and/or soda is temporarily stored in the feeding means (06), in particular in the feed hopper.

6. The batch plant according to any one of claims 3 to 5, **characterised in that**
a conveyor (08) is arranged upstream of the feeding means (06), the conveyor (08) being able to convey sand and/or soda from a respectively assigned storage container (07) into the feeding means (06) of the stand (02).

7. The batch plant according to any one of claims 1 to 6, **characterised in that**
a premixing means is provided in the stand (02) having the storage containers (05), the additives for the glass production being mixed in said premixing means.

8. The batch plant according to any one of claims 1 to 7, **characterised in that**
the stand (02, 03, 04) has a closed outer wall which encloses an interior space in the stand (02, 03, 04) in a dust-tight manner.

9. The batch plant according to any one of claims 1 to 8, **characterised in that**
the batch plant (01, 18) comprises several transportable stands (02, 03, 04) in each of which at least one storage container (05) and/or at last one proportioning means (10) and/or at least one mixing means (12) is/are placed.

10. The batch plant according to claim 9,
**characterised in that**
the different stands (02, 03, 04) of the batch plant (01) are arranged above each other.

11. The batch plant according to claim 10,
**characterised in that**
the different stands (02, 03, 04) of the batch plant (01) are stacked on top of each other.

12. The batch plant according to any one of claims 1 to 11, **characterised in that**
the stand (02) having at least one storage container (05) is elevated such that a loading space is formed between the bottom side of the stand (02) and a roadway (21), a conveyor vehicle (19) to be loaded being placed under the stand (02) in said loading space.

13. The batch plant according to claim 12,
**characterised in that**
the conveyor vehicle (19) comprises a weighing balance (20) in which the quantities of the raw materials to be mixed are weighed.

14. The batch plant according to any one of claims 1 to 13, **characterised in that**
the stand (02, 03, 04) of the batch plant (01, 18) is arranged in a freight container.

## Revendications

1. Installation de mélange (01, 18) pour fabriquer un mélange vitrifiable mélangé de plusieurs matières premières, ladite installation de mélange (01, 18) ayant au moins un récipient de stockage (05) dans lequel une matière première est stockée, ayant au moins un moyen de dosage (10) au moyen duquel les quantités des matières premières à mélanger sont dosées et ayant au moins un moyen de mélange (12) dans lequel les quantités des matières premières à mélanger sont mélangées,
**caractérisée en ce que**
l'installation de mélange (01, 18) comprend au moins un support (02, 03, 04) transportable, au moins un récipient de stockage (05) et/ou au moins un moyen de dosage (10) et/ou au moins un moyen de mélange (12) étant logé/s dans le support (02, 03, 04).

2. Installation de mélange selon la revendication 1,
**caractérisée en ce que**
plusieurs récipients de stockage (05) sont prévus dans le support, des additifs pour la fabrication de verre étant stockés dans lesdits récipients de stockage (05).

3. Installation de mélange selon la revendication 1 ou 2,
**caractérisée en ce**
**qu'**au moins un moyen d'alimentation (06) est prévu dans le support, du sable et/ou de la soude étant amené/e audit moyen d'alimentation (06).

4. Installation de mélange selon la revendication 3,
**caractérisée en ce que**
le moyen d'alimentation (06) pour amener du sable et/ou de la soude est réalisé à la manière d'une trémie.

5. Installation de mélange selon la revendication 3 ou 4,
**caractérisée en ce**
**qu'**une petite quantité de sable et/ou de soude est stockée temporairement dans le moyen d'alimentation (06), notamment dans la trémie.

6. Installation de mélange selon l'une quelconque des revendications 3 à 5,
**caractérisée en ce**
**qu'**un convoyeur (08) est disposé en amont du moyen d'alimentation (06), le convoyeur (08) étant capable de convoyer du sable et/ou de la soude provenant d'un récipient de stockage (07) respectivement attribué dans le moyen d'alimentation (06) du support (02).

7. Installation de mélange selon l'une quelconque des revendications 1 à 6,
**caractérisée en ce**
**qu'**un moyen de prémélange est prévu dans le support (02) ayant les récipients de stockage (05), les additifs pour la fabrication de verre étant prémélangés dans ledit moyen de prémélange.

8. Installation de mélange selon l'une quelconque des revendications 1 à 7,
**caractérisée en ce que**
le support (02, 03, 04) a une paroi extérieure fermée qui enferme un espace intérieur fermé dans le support (02, 03, 04) de manière étanche à la poussière.

9. Installation de mélange selon l'une quelconque des revendications 1 à 8,
**caractérisée en ce que**
l'installation de mélange (01, 18) comprend plusieurs supports (02, 03, 04) transportables dans chacun desquels est/sont logé/s au moins un récipient de stockage (05) et/ou au moins un moyen de dosage (10) et/ou au moins un moyen de mélange (12).

10. Installation de mélange selon la revendication 9,
**caractérisée en ce que**
les différents supports (02, 03, 04) de l'installation de mélange (01) sont capables d'être disposés les uns au-dessus des autres.

11. Installation de mélange selon la revendication 10,
**caractérisée en ce que**
les différents supports (02, 03, 04) de l'installation de mélange (01) sont capables d'être empilés les uns sur les autres.

12. Installation de mélange selon l'une quelconque des revendications 1 à 11,
**caractérisée en ce que**
le support (02) ayant au moins un récipient de stockage (05) est en surélévation de sorte qu'un espace de chargement est formé entre le côté inférieur du support (02) et une chaussée (21), un véhicule de transport (19) à charger étant placé sous le support (02) dans ledit espace de chargement.

13. Installation de mélange selon la revendication 12,
**caractérisée en ce que**
le véhicule de transport (19) comprend une balance (20) dans laquelle les quantités des matières premières à mélanger sont pesées.

14. Installation de mélange selon l'une quelconque des revendications 1 à 13,
**caractérisée en ce que**
le support (02, 03, 04) de l'installation de mélange (01, 18) est capable d'être disposé dans un conteneur de transport.
